# EUROPEAN PATENT APPLICATION

(11) **EP 3 081 357 A1**
(43) Date of publication of application: **19.10.2016**
(21) Application number: 14837228.7
(22) Date of filing: 22.08.2014
(51) Int. Cl.: B29B 9/14, C08L 1/00, C09F 1/00, C04B 35/52, D04H 1/00, B29C 45/14, B29C 39/02, B29C 44/06, D02G 3/00, B29C 45/00, E04C 2/10

(54) **PROCESS FOR PRODUCING A COMPOSITE MATERIAL, AND COMPOSITE MATERIAL**

(30) Priority: 23.08.2013 BR 102013021652
(71) Applicant: Ricciardi, José Carlos, 13213-254 Jundiaí - SP (BR)
(72) Inventor: Ricciardi, José Carlos, 13213-254 Jundiaí - SP (BR)
(74) Representative: Burt, Matthew Thomas
(86) International application number: PCT/BR2014/000288
(87) International publication number: WO 2015/024087

(57) **Abstract**

A description is given of a new product composed of natural and synthetic fibres, and also processes for producing a material for structural use that consists in the following steps: (i) arranging at least a first blanket 11 and at least a second blanket 11', each of which is composed of natural and synthetic fibres and of at least one intermediate layer 12 based on olefins, between the first blanket 11 and the second blanket 11', in order to obtain the required geometry; (ii) heating, compression and adhesion of the assembly obtained in step (i); and (iii) cooling of the assembly obtained in step (ii) to at least a hardening temperature.

## Description

The present invention is inserted in the field of materials and structures and discloses a composite material and a process for manufacturing a composite material. More specifically, the present invention discloses a composite material provided with at least one first web and at least one second web composed by a mixture of natural and synthetic fibers, associated to each other, from an intermediate olefin-based layer, as well as the process for manufacturing this material.

### Description of the Prior Art

At present, the materials developed for structural applications, among them those used for developing automobiles, civil-engineering and ship-building structures, among others, comprise a wide range of components. Such elements, when aggregated, are capable of offering different properties and characteristics according to the need and application for which they are intended. Such materials can be called composite, tricomposite materials, etc.

In essence, these composite materials applied to structures and coatings are presently manufactured from at least a few of the following elements:
- fibers;
- resin or matrix;
- hardeners or resin curing agents;
- unmolding agents.

It is opportune to say that composite materials are defined as being materials formed of two or more constituents with distinct compositions, structures and properties and that are separated by one or more interfaces. The main objective in producing composite materials is to combine different materials to produce a piece with properties that are superior to those of the separate components.

Additionally, the properties of composites are controlled chiefly by the properties of their constituents, their distribution, dispersion, interaction thereof with the matrix, as well as their shape and size. Knowing the individual properties of each material and how they interact with one another, one can design a material that is ideal for a given application. In addition, composite materials are also designed to meet applications that need a set of specific properties, be they structural, thermal, electric, tribologic, optical or other properties.

For this reason, the methods or processes of manufacturing this type of material for structural application have fundamental participation in defining the physical properties of the final product. Among the various methods available, the ones that are more pertinent to the present invention will be described in greater detail hereinafter.

Taking, for instance, the production of internal lining of an automobile door, where one of the portions faces the inner part of the door and the other portion, provided with finish, faces the inside of the vehicle, one of the production methods available refers to the manufacture by plastic injection, which in general terms can be summarized according to the following steps:
a) individual injection of a first and a second web composed of natural and/or synthetic fibers in separated molds;
b) pairing the webs obtained in step a) by a cluing, welding, ultrasound, vibration or hot-plate processes, by means of a tool and specific equipment; and
c) application of adhesive for gluing a lining, followed by pressing in a specific mold for finishing the adhesion of all the material layers.

Although this is a quite heavily employed method for manufacturing these materials, it has various drawbacks, namely:
i) the two injected webs must have exact dimensions between themselves, so that the pairing thereof will be perfect, with a view to prevent flaps or cracks;
ii) use of various molds for the injecting and pressing steps; and
iii) the use of glues or resins, when necessary, which produce toxic fumes that are harmful to operators.

A second method used for manufacturing composite materials according to the present invention is achieved by vacuum thermoshaping. In essence, this method consists of a process capable of heating a web up to the thermoplastic softening temperature for subsequent gluing in a cooled multi-cavity mold. Then, the product shaping takes place by action of compressed air and vacuum. The product is then cooled, cut, unmolded and paired with another web to form the composite material.

Among the advantages presented by this process, one can cite that the parts structured by it are only possible by increasing the thickness of the webs. Additionally, in order to provide the material with resistance, it is necessary to create reinforcements by adding elements (such as tubes or steel portions), which may be used in conjunction with ribs to increase the rigidity of the piece. Naturally all these constructive conditions end up causing an increase in the final weight of the piece, which is markedly known as a drawback. It should be pointed out that the addition of elements with a structural function like steel has the advantage of guaranteeing the strength of the piece, but it usually imparts resistance higher than necessary, bringing an oversizing that reduces the binomial weigh (excessive addition of weight) + cost (increase in the number of production steps and consequently in the final cost of the piece).

Moreover, since this manufacture method generates products with different thicknesses resulting from the stretching that takes place in the thermoshaping and in the act of shaping, cracks and deformations may appear due to the residual stress resulting from the cooling. These defects make it difficult or even impossible to pair and press the material subsequently to finish the adhesion of all the layers of the composite material. This is one of the factors of vibration noises in vehicles, since although a piece may have a perfect engagement in its mounting, after exposure to sunshine the stress tends to relax, causing deformation of the layer already mounted on the vehicle and thereby the annoying noises that are typical of plastics.

A third method that is presently used for manufacturing these composite materials with structural application is defined as a twin-sheet method.

This manufacture method essentially consists in heating two boards of thermoplastic material, just as in the vacuum thermoshaping method described before. These heated boards are then vacuum molded, positioned parallel to each other with the cavities fixed to a press and then shaped. Immediately after this shaping, the system is closed, joining the two formed faces into a single piece.

In this way, this method implies the use of various shaping molds and vacuum pumps, giving rise to steps that may cause inaccuracies in the pieces that will later be paired and pressed. As a result, the final material obtained by this method has the advantage of low thermal and dimensional stability.

Once the presently known methods for manufacturing composite materials for structural purposes have been described, one will now present the composites that are traditionally used in these manufacture methods. The composite materials with structural application are manufactured from the mixture of two or more materials selected from particulate, laminated, fibrous, fibrous-laminated composites, and the composites developed for structural purposes, such as high-performance polymers provided with ceramic or polymeric fibers of high elastic module and strength.

Recently natural fibers have become an alternative to the synthetic components used for reinforcing the materials with structural application in the most varied fields (ship-building, civil engineering and automotive).

By way of example, the automobile industry already uses line fibers, sisal-hemp and hemp fibers in the inner lining of doors and luggage space, as well as coconut fibers and rubber on the seats. For the automobile assembly plants, the use of natural fibers means lower costs in the manufacture of the materials and less heavy cars, which results in saving fuel and also contributes to a smaller impact on the environment.

The use of natural fibers, mixed with other appropriate components, has a number of advantages over other inorganic compounds for reinforcing composite materials. It should be noted that natural fibers are lighter, less expensive, have lower density than glass and graphite fibers, besides coming from renewable sources, are not abrasive, they are biodegradable and widely available in the national territory. Moreover, natural fibers guarantee good mechanical properties and low thermal and electrical conductivity.

Additionally, natural fibers act on the microcracks of the materials, restricting the growth of fibers when subjected to stresses that lead to rupture of the composite, thus improving the mechanical properties of the materials in which they are present, with breaking strength, elasticity module in bending, fatigue and resistance to impact. The addition of natural fibers has the advantage of guaranteeing the dimensional stability, as well as of aiding in the distribution of internal stresses, decreasing the warping of the piece. This takes place because natural fibers are less sensitive to heat deformation.

In this context, there is today a growing interest in optimizing the incorporation of natural materials and of lignocellulose materials (natural fibers such as sisal, coconut, banana, curauá *(Neoglaziovia variegata)* and jute fibers), as a reinforcement in thermoset or thermoplastic matrices.

More concretely, natural fibers are used as reinforcement in polymers, partly replacing synthetic fibers like asbestos, Kevlar, boron, carbon, nylon and glass, which, in spite of having good mechanical characteristics, have a high cost, are abrasive to the processing equipment, have high density, are not biodegradable, generate products with too high recycling cost, and some of these fibers are harmful to human health.

These composite materials, presently obtained, bear in their composition resins, in addition to natural fibers. The main objective of these resins, called also matrices, is to transfer the stresses imposed on the composite material for fibers, besides serving as support and protection thereof. As a rule, thermoset or thermoplastic resin matrices are used.

As main characteristics, thermoset resins have good mechanical properties and dimensional stability, besides being easily processable. They are further resistant to chemical attacks and have high thermal resistance.

Thermoset resins are generally the most widely used, since under the effect of heat they polymerize, in an irreversible process. Their carbon chains have a three-dimensional geometry. In other words, thermoset materials or thermoset resins cure in an irreversible state because their molecular structure is interlinked.

However, when polymeric resins undergo forces or impact loads, the relaxations of the molecular structure do not accompany the process, resulting in fracture caused by break of the chain and/or separation of the interfaces.

This phenomenon takes place especially in thermoset resins, due to the low resistance to impact provided by the cross-linked networks, formed under the influence of heat or curing agents. Thus, there is a need to employ reinforcements in these polymeric matrices, often achieved by means of structural ribs. These structural ribs have the objective of providing a determined region that undergoes more mechanical stress with greater resistance. Naturally such a solution requires a more complex mold and a larger amount of material, resulting in a larger weight and higher cost.

The application of matrixes based on thermoplastic resins for the same purpose is also possible, and the choice will depend on the properties expected for the final composite material.

Thus, the structure and properties of the matrix/fiber interface influence significantly the final properties of the composite material, the interface adhesion increasing the transmission of tension from the matrix to the fiber, enhancing the mechanical performance of the composite. In case there is this interaction, the material will be subject to catastrophic failures, as for instance, development of cracks on larger scales, which may lead to fracture of the composite material.

Usually, the interaction between the fibers and their substrate takes place via mechanical adhesion, this being the most common adhesion mechanism. The junction takes place through penetration of the "adhesive" in liquid form into the pores, roughness and cracks of the substrate. After evaporation of the solvent or chemical reaction, the resin solidifies, providing greater adhesion at the point where the anchorage has been more marked.

In spite of the studies applied with a view to improve the sue of natural fibers in the base mixture of the composite materials, the problems encountered by the attempt to incorporate natural fibers into the base mixture are due to the hygroscopic nature of cellulose and to its thermal degradation temperature, high variation of properties and low resistance to microorganisms. With regard to the low thermal degradation temperature, during a processing at relatively low temperatures, on the order of 200C, the degradation of the natural fiber limits its competitive use, for example, glass fibers.

In addition to this drawback, composite material with structural application comprise, at present, toxic components like resins and unmolding substrates, besides possibly employing materials such as glass fiber.

It should be pointed out that the manufacture of materials with structural application, so as to obtain a product with greater rigidity, less weight, impermeability, while keeping all the advantages of natural fibers, such as good thermo-acoustic properties, thermal and dimensional stability, recyclability and low cost, cannot be guaranteed, for instance, by glass fiber. This material, in addition to the restriction on shaping pieces with reduced thickness and/or complex geometry, glass fiber is heavy, which eliminates its competitiveness for applications, for instance, of coatings in the automobile industry, aeronautics, construction, among others.

The known solutions, as already mentioned, make use of reinforcements to achieve a structural resistance, known as load, which often exceeds the need. If one thinks of a car cover or automobile lining, it is also necessary to observe that the solutions available so far do not have the necessary thermal resistance, which gives rise to two situations, less comfort for the user and decrease in the structural resistance of the piece.

Until the present moment, one has not found a solution that enables one to reach, in harmony with an optimized manufacture process, a commercially viable composite material, which can be shaped in complex geometries. A material that can guarantee a relation between reduced weight and structural, as well as thermal resistance, being capable of incorporating natural fibers into the base mixture.

### Objectives of the Invention

Therefore, it is an objective of the present invention to provide a process for manufacturing a composite material capable of offering optimization of the manufacture steps, this process being capable of reducing the processing time, the amount of material used and, as a result, a reduction of the cost of a product having high dimensional stability, mechanical and thermal resistance.

It is also an objective of the present invention to provide a process for manufacturing a composite material free from harmful materials, capable of offering the worker safety, besides being less harmful to the environment.

Finally, it is an objective of the present invention to provide an olefin-based composite material for applications with structural purposes with or without complex geometry, a material that can be composed by natural fibers and, therefore, offer all the advantages inherent in natural fibers and which will have less weight, good thermoaccoustic properties, good thermal and dimensional stability, recyclability and low cost and which simultaneously is an impermeable material and has high rigidity.

### Brief Description of the Invention

The objectives of the present invention are achieved by means of a novel process for manufacturing a composite material, which consists in the following steps: step (i) - contact heating of at least one first web and at least one second web, each of which being composed of natural and synthetic fibers, the heating taking place up to at least a temperature that will soften the synthetic fibers is reached; step (ii) - arranging the first and second webs heated in step (i) in the mold cavities; step (iii) - arranging at least one intermediate olefin-based layer in the mold, between each first and second webs; step (iv) - pressing the assembly obtained in steps (ii) and (iii); and step (v) - cooling the assembly obtained in step (iv) until at least a hardening temperature is reached.

The objectives of the present invention are further achieved by providing a composite material provided with at least a first web and at least a second web, each being composed of natural and synthetic fibers, the first and second webs being associated to each other and the association between each first and second webs being provided by means of an intermediate olefin-based layer.

### Brief Description of the Drawings

The present invention will now be described in greater detail with reference to an example of embodiment represented in the drawing. The figure shows:

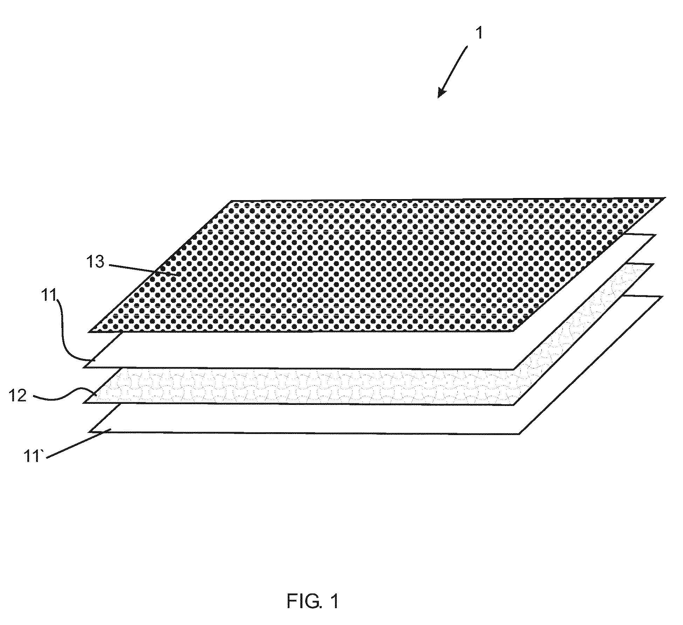

Figure 1 is an exploded view of the material of the present invention in a first preferred embodiment.

### Detailed Description of the Figure

The manufacture process and the composite material 1 resulting from this process, object of the present invention, will be described hereinafter with reference to Figure 1, which represents a possible embodiment of the composite material 1.

In general outline, the process of the present invention uses a novel way of making interaction of components known from the prior art, namely: a mixture of natural and synthetic fibers and olefin-based components, to create material that can be applied structurally and/or as finish in various applications, as for example, in the inside of automobile vehicles.

However, the present process employs these components in a specific composition, in steps under particular conditions, so as to obtain a composite material 1 that is provided with properties capable of comprising all the advantages known from the prior art, without the need to add elements to guarantee the structural function.

Additionally, the composite material 1 will be provided with excellent structural properties, less weight, good thermoacoustic properties, good thermal and dimensional stability, recyclability, low cost and will simultaneously be an impermeable material and have high rigidity, as can be seen hereinafter.

All these characteristics converge, so that the composite material 1 of the present invention will have excellent presentation, which contributes to a finish with high quality. In short, by means of a surface coating one achieves an excellent appearance, resistance and low cost.

In other words, the present invention provides a process for manufacturing a composite material 1 that comprises the following steps:
- Step (i): contact heating at least one first web and at least one second web 11,11', each being composed of natural and synthetic fibers, the heating taking place up to at least a temperature that will soften the synthetic fibers;
- Step (ii): arranging the first and second webs 11, 11' heated in step (i) in the mold cavities;
- Step (iii): arranging at least one intermediate olefin-based layer 12 between each first and second webs 11, 11';
- Step (iv): pressing the assembly obtained in steps (ii) and (iii); and
- Step (v): cooling the assembly obtained in step (iv) down to its hardening temperature.

It should be noted that the cost price for processing a composite material is fundamental, so that it can be used by the market. So, a process that has difficulty in obtaining complex geometries generates excessive cost, reducing the competitiveness on the market.

The excess weight of the material also entails limitations, since, for instance, the automobile industry constantly seeks weight reduction. Therefore, there is a commitment regarding high values of structural resistance, weight, cost and shapability.

On the other hand, greater weight not always means greater resistance. Although the increase in weight per square meter generates a an increase in strength, taking, for example, a 800g-weight per square meter, a heating time of 30 seconds will be necessary, whereas for a 2500-gram weight per square meter 70 seconds will be required. This difference in time excludes the chances of commercial success of the second option because of the excessive production cost.

Moreover, in spite of the bigger load, the 800g weight per square meter may achieve greater strength than that of 2500g. This is due to the design, the influence of the ribs to increase the resistance and chiefly from the capability of adhesion of the intermediate layer 12. It should be noted that in this size, for example, a flat plate of the composite material of the present invention, when the latter is bended by the ends, a tensile force results in the central region between the first and second webs 11, 12', this force being supported by the adhesion capability of the intermediate layer 12. Thus, the success of each design and of its strength depends not only on the weight of the piece, but rather on the adhesion relation between the webs and the intermediate layer 12.

In other words, the high adhesion capability of the intermediate layer 12 enables the composite material 1 to obtain high strength. Such a statement is due to the fact that the forces applied to some outer layer of the composite material 1 are transmitted by traction to the intermediate layer 12, so as to try to cause a layer to "skid" with respect to the other, and what prevents this from occurring is chiefly the high capability of adhesion between the layers.

It should also be noted that the arrangement in adjacent layers of the composite material 1 achieves much greater mechanical properties than the sum of the properties of each insulation layer.

### THE FIBERS USED

Said first and second webs 11, 12' used in the present process comprise the mixture of natural and synthetic fibers, as discussed before in the prior art.

The mixture of natural and synthetic fibers of the webs 11, 11' is composed by a proportion of the mixture that ranges from 20 to 70% (natural and synthetic fibers), this proportion varying according to the preferences of the market. A conventional, but not compulsory mode is of substantially 50% of natural fibers and 50% of synthetic fibers.

By way of example, the webs 11 and 12' used in the manufacture of the present material 1 are composed by natural fibers, which may be jute, sisal, curauá *(Neoglaziovia variegata),* cotton, hemp fibers or any other type of natural fibers suitable for this function, but this is not a limiting factor for the embodiment of the invention.

Besides natural fibers, synthetic fibers are added, which may be fibers of polypropylene (PP), polyethylene (PE), polyesters such as polyethylene terephthalate (PET) or any other synthetic material pertinent to this function. Moreover, these synthetic fibers may be virgin fibers, recycled fibers or a mixture thereof and should be fundamentally olefin-based fibers.

It should be noted that the weight of the webs 11 and 11' is limited to the choice of their composition (composition of fibers, needling, proportion between one and the other, etc.) Although the best results in terms of quality are found in weight per square gram with specific masses are substantially 500g/m2, other masses may be used depending on the application. This is not a limiting factor either, knowing that for an increase of the load it will be necessary to use a higher density and, as a result, a bigger weight which will guarantee greater strength.

It should be noted that natural fibers undergo less thermal expansion than synthetic fibers, for which reason the need to add a polymer with high thermal resistance to prevent variations in dimension is eliminated.

The low thermal expansion of natural fibers manages to compensate the thermal expansion of the synthetic fibers, so that the composite material 1 will not undergo undesirable thermal expansions.

Moreover, natural fibers manage to maintain the thermal resistance of synthetic fibers, even having lower density, a fundamental advantage in various branches of the industry (automotive industry, aeronautics, etc.).

Finally, natural fibers have pores, and so they acquire high thermal insulation by virtue of the presence of air, and this feature results in advantages that will be described in greater detail along this specification.

With regard to the use of glass fiber to replace the materials of the present invention, one can state that it is industrially/commercially unfeasible. Besides the difficulty in obtaining complex or too thin geometries in glass fibers, this is due chiefly to the high density as compared to the material of the present invention, since glass fiber has density of about 1500kg/m³, whereas the composite material 1 of the present invention has density of about 0.3kg/m³, that is, about 5,000 as high.

### REGARDING THE PROCESS

### STEP (i)

As a result of the determined composition of the first and second webs 11, 11', step (i) has the objective of heating the web until it begins to soften, by contact heating, in which heat is transferred from the outer portion of the webs (11,11') to the inside thereof. The heating takes place in this way, guaranteeing the softening of the synthetic fibers, without deteriorating the natural fibers.

It should be noted that the heating time to reach the softening temperature of the web of natural and synthetic fibers is defined case by case. The selection thereof is given as a function of the weight per square meter of the webs and of the contact heating process.

In this regard, the weight per square meter of the material is defined as a function of the mechanical characteristics required in the final product. The higher the weight per square meter the more energy is consumed to achieve better molding condition (softening temperature). According to the necessary conditions, the heating time, the temperature or both can be increased.

### STEP (ii)

The objective of step (ii) is to provide correct arrangement to the webs already heated and softened in the first step (i) in a mold. Preferably, but not compulsorily, the mold used in step (ii) is a mold with a cooling system. Such a mold may be made of aluminum, obtained by simple machining, and one may also use a mold made of steel or any other material that proves to be functional. Alternatively, the mold may be simpler, that is, without cooling, but whether the cooling will be left out or not will depend on the conditions of the process.

### STEP (iii)

Step (iii), in turn, deals with the positioning of an olefin-based intermediate layer 12, as defined above, between the first and second webs 11, 11' of step (i). It should be noted that, at this moment, the webs 11, 11' are heated and softened and correctly positioned in the mold cavities.

It should be noted that the inertia of the temperature of the webs 11, 11', more concretely the temperature corresponding to the softening of the synthetic fibers present ion the composition of the webs 11, 1', promotes the melting, in step (iv), of the appropriate olefin-based intermediate layer 12.

With regard to the olefin-based intermediate layer 12 of step (iii), it is arranged between the each first and second webs 11, 11', being formed essentially of olefin compounds. In this regard, the choice of the composition of this intermediate layer 12 should be according to the choice of the synthetic fibers of the webs 11 and 11' described above. This choice results from the fact that the association of the webs 11, 11' take place by means of chemical interaction between the intermediate layer 12 and the synthetic portion of the first and second webs 11, 11'. Affinity between these two portions will guarantee correct/stable association of the webs 11, 11'. Thus, this is one of the fundamental points of the present invention.

Preferably, but not compulsorily, this intermediate layer 12 may be a foam of polypropylene (PP), polyethylene (PE) or any other physically cross-linked component suitable for this function. The advantage of using a foam lies in the fact that the positioning thereof is more practical, and besides the storage thereof is also more compensatory.

Naturally the intermediate layer 12 may have its thickness and density adjusted to each application, seeking to improve the ratio between strength, thermoacoustic insulation, weight and costs. Besides, olefin-based foams (corresponding to the intermediate layer 12), for example, of PP or PE, may be cross-linked, which, when adhered to the web of the outer face, improve the resistance to impact, resulting in an improvement of the elasticity module (E-Modules).

Alternatively, between the steps (i) and (iii) there is the possibility of positioning at least one coating layer 13 on one outer face of the composite material 1 to be manufactured, simultaneously with the arrangement of the heated webs 11, 11'.

It should be noted that the coating layer 13 is positioned in contact with at least one mold cavity. It is important to point out that the adhesion of the coating layer 13 is simultaneous with the molding, and it is not necessary to apply adhesives. In this way, the adhesion of the coating layer 13 is promoted exclusively by melting the synthetic fibers.

The coating layer 13 applied has an esthetic function, improving the visual aspect of the piece, besides, depending on the choice of the material used for the coating, providing complementary benefits to the effect of improving thermoacoustic properties, touch comfort, among other. As an example, one may incorporate a web of non-woven fabric (needled) with a mixture of polypropylene (PP) and polyethylene terephthalate (PET) fibers, or else the desired characteristics can be achieved by using fabrics, tri-nitro toluene (TNT), vinyl and olefin thermoplastics (TPO) as coatings and, depending of the application, also carpets, leather, etc.

### STEP (iv)

As a result, step (iv) deals with the pressing of the assembly obtained with the webs 11, 11', olefin-based intermediate layer 12 and, if any, the coating layer 13.

The pressing time, as well as other physiochemical variables that compose this method, are inherent in the characteristics of the materials, such as the synthetic fiber of the webs 11, 11', the component of the coating 13, the olefin-based intermediate layer 12.

In this regard, it is assumed that the pressing, as well as the next step (v), are carried out for a time sufficient to start the hardening of the material, guaranteeing the final quality of the product. It should be noted that, from the beginning of step (iv) to the end of the present process, the cooling function of the mold is or is not necessary, that is the mold is already cooling to remove heat from the pressed assembly. This results from the need to accelerate the cooling of the webs, thus promoting the hardening of the already associated layers.

### STEP (v)

Finally, step (v) consists in keeping the pressed assembly still in the mold until complete cooling is reached, so that the unmolding will take place successfully. Indeed, this cooling begins with the pressing itself of step (iv).

Both the cooling time and the temperature that will be reached to guarantee perfect unmolding are values dependent upon the metals chosen for the manufacture of the final composite material 1 according to the need.

Alternatively, it is important to note that, although steps (i) to (v) have been discriminated for a better understanding of the invention, one of the preferred embodiments of this invention results from the advantage that this manufacture method may also be carried out in a continuous manner, which consists in carrying out the procedures corresponding to steps (i) to (v) in only three steps that take place simultaneously.

This type of continuous manufacture favors gain in productivity and, as a result, reduction of costs.

This continuous way of processing the composite material 1 is very efficient when it comes to productivity, since it renders the whole process very simple, without increase in cost. Thus, the use of this solution enables one to meet the greater demands in a shorter time.

Such an alternative process is achieved with the following steps:
- Step (i): arranging at least one first web 11 and at least one second web 11', each being composed of natural and synthetic fibers, and arranging at least one olefin-based intermediate layer 12 in a mold, between the first web 11 and the second web 11';
- Step (ii): heating, pressing and adhering the assembly obtained ion step (i); and
- Step (iii): cooling the assembly obtained in step (ii) down to at least a softening temperature.

Alternatively, the present invention may have a process where the webs (11, 11') and the intermediate layer (12) are pre-heated. Then this pre-heated assembly is arranged in a mold together with the coatings, in order to obtain the product in its final form in virtually one step, since the pre-heated assembly can be obtained in a continuous (scale) process, the operational assembling and molding part being restricted to a single step.

It should be further noted that all the above-described variations regarding the raw materials, composition, percentages, times, temperatures, handling conditions and equipment and other characteristics detailed for the first above-described embodiment of the process hold true for this alternative embodiment of the process as well, in a complementary or independent manner.

It should be further noted that the manufacture process of the present invention may also be bleached, which conforms to low volumes or special series.

Once the composite material 1 has been finished, it is possible to aggregate plastic and/or metallic components (such as finishes) by means of adhesive or welding (vibration, hot plate, ultra-sound). It should be reminded that component riveting is also possible. It should be noted that, unlike the prior-art solutions, the product of the present invention has much superior strength. Taking as an example the lining of an automobile ceiling, usually light for illuminating the inside is fixed on a frame (generally a steel plate), but in the present invention the lighting assembly may be fixed directly to the composite material, without any frame.

It should be noted that carrying out such a finish on the composite material 1 on the press itself where the composite material 1 has been produced results from numberless advantages in comparison to the application of the finish by an injecting device, since on the press, unlike the injecting device, the composite material 1 is already cooled at the moment of making the finish, which enables the application of higher pressures, without undesired deformations of the material taking place.

At the end of this process, the composite material 1 is achieved, provided with all the properties and characteristics that will be better defined hereinafter.

### MAIN ADVANTAGES INHERENT IN THE PROCESS OF THE PRESENT INVENTION

An advantage of the present process consists in total adhesion between the webs 11, 11'. As a result, the composite material 1 obtained has a single anchorage homogeneously distributed over its surface. The explanation for this phenomenon is that the intermediate layer 12 undergoes melting that guarantees its total distribution in the space existing between the webs 11, 11', that is, an absolutely homogeneous cohesion.

In this regard, any mechanical stress is distributed over the surface of the composite material 1, rather than directed only to the specific and supported anchorage points, as in the prior art (example: only at the gluing points). Thus, the design of the piece may or may not make use of ribs that are usually applied by the prior art, which seek to provide additional resistance to the composite material 1. At the moment when the whole structure of the composite material 1 acts with resistance to load, there is no reason to lead these loads to possibly existing ribs. In this way one reduces the complexity of the molds as well.

It is a further advantage of the manufacture process of the present invention to eliminate at least one mold as compared with manufacture methods employed at present. This is because, in the present invention, the mold used for making the webs 11, 11', the olefin-based intermediate layer 12 and optionally the coating layer 13 is the same mold that promotes cohesion between the layers and simultaneously provides the final shaping of the material.

In the present process, once the prototype mold has been chosen, the adoption of this definitive mold for the production of the material obtained at the end of the process needs only the provision of cooling bores, which may be made by a simple blowtorch. This promotes rapidity of the process, besides reduction of costs because it is not necessary to wait for a final mold for days or weeks.

Therefore, as an additional advantage, the present process for the manufacture of a material prevents unnecessary disposal of the prototype, since it is possible to use the prototype for final material molding.

### ABOUT THE COMPOSITE MATERIAL OF THE PRESENT INVENTION

The composite material 1 obtained by the process of the present invention will be better described hereinafter, still with reference to figure 1. In summary, the composite material 1 of the present invention consists of a aggregate material of a number of layers that import to it strength, low cost, impermeability, good thermoacoustic properties, stability/thermal and dimensional insulation, recyclability and low cost.

In essence, the composite material 1 is provided with at least one first web 11 and at least one second web 11', each being composed of natural and synthetic fibers, the first and second webs 11, 11' being associated to each other by means of an olefin-based intermediate layer 12. In this way, the composite material 1 may contain numberless associated intercalated webs, that is, always with an intermediate layer 12 in-between.

Alternatively, one may add at least one coating layer 13 on at least one face of the composite material 1. Taking a vehicle door as an example, the lining of which comprises the composite material 1 of the present invention, the lining portion facing the inside of the vehicle may receive a coating 13 to provide the desired finish, such as fabric, leather, etc. Naturally the coating 13 will depend on the application of the product, but in order to have a broader idea of the possibilities, the composite material 1 may also be used as a finish of a false ceiling of a building and, in this case, the coating 13 may be made of a material capable of receiving a painting.

By way of example, the natural fibers of the webs 11, 11' may be jute, sisal, curauá *(Neoglaziovia variegata),* cotton, hemp fibers or any other type of natural fiber suitable for this function.

As said before, it is important to point out that the main advantages of using natural fibers in the composition of the present composite material 1 are: abundance, low thermal dilation, high thermal insulation, low cost, low density, ease of obtaining and handling it, non-toxic properties, low abrasion, biodegradability and the economical and renewable aspect. All these positive characteristics are aggregated in the composite material 1 presented herein.

Additionally, synthetic fibers are added to the natural fibers, which may be, for example, polypropylene (PP) fiber, polyethylene (PE) fibers, polyethylene terephthalate (PET) fibers, or any other synthetic material suitable for this function. Moreover, these synthetic fibers may be virgin fibers, recycled fibers or a mixture thereof.

As far as the olefin-base intermediate layer 12 is concerned, it is present between the first and the second webs 11, 11', independently of the number of times that this assembly repeats itself. On other word, the assembly of first web 11 united to the second web 11' by means of the intermediate layer 12, may repeat itself consecutively. In this way, this tricomposite assembly may repeat itself a number of times to form the composite material; it is enough to add an intermediate layer 12 to one of the webs, so that a new web can be associated so as to achieve the desired thickness. Thus, the composite material can serve for both producing a thin shelf and a house door.

Naturally, the olefin-based intermediate layer 12 is chosen according to the choice of the synthetic fibers of the webs 11, 11', since the association of the webs 11, 11' takes place by chemical interaction between the molten intermediate layer 12 and the molten synthetic portion of the first and second webs 11, 11'. Affinity between these two portions will guarantee correct/stable association of the webs 11, 11'.

Preferably, but not compulsorily, the layer 12 is a foam of polypropylene (PP), polyethylene (PE) or any other physically cross-linked component suitable for this function, which means that it must provide excellent adhesion to the adjacent fibers and be a good thermal insulation. It should be noted that the intermediate layer may also be applied as a liquid or even by spraying, while guaranteeing the amount necessary for adhesion between the first and the second webs 11, 11'. Moreover, the thickness and the density of the material employed in the layer 12 may vary according to the preference of the market.

An additional advantage of the present invention is the capability of the composite material to promote thermal insulation. If one thinks of the application of a coating of an automobile ceiling, this additional thermal protection results in a great comfort for the user. This is due to both the lower vehicle heating intensity and the fact that this facilitates the operation of an air-conditioner, reducing the consumption of fuel. At the same time, the present invention does not undergo deformations typically existing in the solutions found in the prior art.

The fact that the intermediate layer 12 acts as a thermal insulation guarantees that the heat will not pass from one web to the other. So, the actuating tractive forces and a first web 11 are annulled by the opposing forces of a second web 11', the latter being superior due to the fact that the second web is at lower temperatures, thus being capable of resisting actuating internal forces/stresses. This fact is easily proven ion a hot bench test, typically carried out by the industries that consume these composite products.

In turn, one may apply a coating layer 13, as indicated above, its function being esthetic so as to improve the visual aspect of the piece, when functional, and it may be a surface prepared for receiving plaster or painting, or even a metallized finish. Ion other possible examples, one may incorporate a web of non-woven fabric (needled) with a mixture of polypropylene (PP) and polyethylene terephthalate (PET) fibers. Another example can be achieved by using fabrics, tri-nitro toluene (TNT), vinyl and olefin thermoplastics (TPO) as coatings and, depending on the application, also carpets, leather, etc.

Thus the choice of the material used for the coating 13 provides complementary benefits to the effect of improving the thermoacoustic properties, touch comfort, among others.

### ADDITIONAL ADVANTAGES

In view of the advantages provided by the composite material 1 presented, the requirement strength is the result of the choice of the weight per square meter and of the proportion between the natural and synthetic fibers that compose the webs 11, 11' comprised by the composite material 1 of the present invention, as well as of the number of webs used.

Indeed, by varying the weight per square meter of the webs 11 and 11', or the thickness of the olefin-based intermediate layer 12 between them, one vary the strength of the material 1, a characteristic that defines an imperious factor for determining applications, for example, structural applications in civil engineering.

One should further mention the weight presented by the present composite material, which results from the use of natural fibers in the composition of the webs 11, 11'. By way of example, the main components of natural fibers may be: cellulose, hemicellulose, lignin, pectin, extractive (low-molecular-weight components), all these low-density components, which consequently decrease the weight of the composite material 1.

Such a decrease in density, in addition to the obvious advantages regarding the low weight of the final product, provides lower energy consumption because of the shorter heating time required. This reduces costs and increases productivity.

Another characteristic present in the composite material 1 is the impermeability that eliminates the drawback of using natural fibers that are hygroscopic in nature. This results from the fact that, at the moment of adhesion of the natural fibers to the synthetic fibers and to the olefin-based intermediate layer 12, the natural fibers are covered by an impermeable synthetic layer. Thus, the absorption of moisture is negligible, which makes the products washable, it being enough that the coating 13 be susceptible to this process.

In this regard, the use of natural fibers mixed with synthetic fibers for the composition of the webs 11, 11' brings advantages to the product, since for this type of fibers the energy required for its production is comparatively little, and its manufacture costs are low, besides the fact that they are abundant, cheaper and do not require a high degree of industrialization during its processing.

Besides, natural fibers act on the microfissures of the composite material 1, thus improving the mechanical properties thereof, such as breaking strength, bending strength, besides providing greater resistance to impacts, because natural fibers deform, but does not break, since they are long and intertwined, imparting greater elastic limit to the composite material than the prior-art solutions. More specifically, the cellulose fibrils that compose natural fibers are aligned along the fiber length, which results in maximum traction resistance and bending strength, besides providing rigidity on the fiber axles. Therefore, this is also an isotropic material.

The characteristic of dimensional stability achieved by the product presented comes also from the inclusion of natural fibers in its composition. In other words, natural fibers keep the composite material 1 free from contraction, dispensing with compensations in the manufacture of the molds and also inhibiting dilation when exposed to heat. Besides, the olefin-based intermediate layer 12 used provides insulation and thermal comfort and contributes to this dimensional stability. It should be noted that the materials do not cool down uniformly, which generates inner tensions. The solution presented herein does not undergo these contractions, which guarantees the explained dimensional stability.

With a view to achieve an even more important characteristic, the comfort of the composite material 1 is achieved quite successfully. The efficient thermoacoustic insulation achieved produces a feeling of comfort, since the composite material 1 acts as a barrier that keeps the balance, be it at high temperatures or at lower temperatures. Additionally, the choice of the coating layer 12 on at least one outer face of the material may modify completely the application thereof, according to the need, required comfort and properties of the material such as impermeability, thermoacoustic insulation, flexibility, strength and rigidity.

Moreover, the "sustainable" factor inherent in the natural fibers used and the "recyclable" factor achieved by the composite material 1, have presently determining consequences on the production and storage costs, sale and choice of the consumer, who tends to opt for products that are produced with some environmental concern.

In order to give an idea of the impact of the present invention, the storage and transportation costs are reduced, since the products made with the composite material 1 can be supported on only two points, since the material acts as a resistance element. In prior-art materials, the critical points of the piece have to be supported carefully to prevent fracture, since the structural resistance of the material is concentrated on ribs.

With regard to the recyclability of the composite material 1 of the present invention, the ground material from the residues of the manufacture process and/or from the discarded final product may be added as a load in injection and/or extrusion processes, or even incinerated without damaging the environment.

Apart from that, this composite material 1 can be applied in the most varied areas, and can be transformed into products that range from the application on automobiles to the construction sector. More specifically, this material can be used, besides other areas, in:
- automotive industry:
   - ceiling coatings;
   - column coatings;
   - door = packages;
   - glove-compartment cover;
   - object-holder;
   - luggage-compartment floor;
   - column coatings;
   - thermoacoustic insulation;
   - back and side coatings of utility vehicles;
   - finish with structural function;
- civil engineering:
   - ceiling finish;
   - partition walls;
   - panels such as tehrmoacoustic ones;
   - doors;
   - furniture;
- Shipbuilding and Aeronautics:
   - panels for cabin and side coating;
   - ceiling coating;
   - seat coating;
   - floors.

### POSSIBLE CONSTRUCTIVE EMBODIMENTS

Hereinafter a few combinations of fibers are indicated, which are not compulsory, and they are recommended for better operation of the first and second layers 11, 11'.
- Polyester and polypropylene (50%) + natural fiber (50%), or
- Jute (50%) + polystyrene (25%), or
- Polypropylene (50%) + (25%) + jute (25%), or
- Polypropylene (60%) + viscose (40%), among others.

Although the percentage of polyester and natural fiber may vary freely, admitting the minimum percentage of polypropylene fixed as being 50%, better results are achieved.

Such embodiments are developed to obtain better results, as cited before. The different compositions are also worked so as to meet rules and requirements of determined markets, since, depending on the origin of the natural fiber (such as jute), one may detect levels of formaldehyde higher than those specified. In these circumstances, one may work with lower percentages of natural fibers, or alternatively with a polypropylene and viscose composition.

Thus, the present invention proposes a composite material 1 capable of guaranteeing a commitment between industrial viability, strength, weight and geometric complexity that were never aligned before, by means of two webs 11, 11' and molten foam arranged between these webs.

Preferred examples of embodiment having been described, one should understand that the scope of the present invention embraces other possible variations, being limited only by the contents of the accompanying claims, which include the possible equivalents.

## Claims

1. A process for the manufacture of a composite material (1), **characterized by** comprising the following step:
• step (i) - contact heating of at least one first web (11) and at least one second web (11'), each of which being composed of natural and synthetic fibers, the heating taking place up to at least a temperature that will soften the synthetic fibers is reached;
• step (ii) - arranging the first and second webs (11, 11') heated in step (i) in the mold cavities;
• step (iii) - arranging at least one intermediate olefin-based layer (12) between each first and second webs (11, 11');
• step (iv) - pressing the assembly obtained in steps (ii) and (iii); and
• step (v) - cooling the assembly obtained in step (iv) until at least a hardening temperature is reached.

2. The process for manufacturing a composite material (1) according to claim 1, **characterized in that** the webs (11, 11') comprise at least the natural fibers of the type: jute, sisal, curauá *(Neoglaziovia variegata*), cotton or hemp fibers, used either in isolation or in conjunction.

3. The process for manufacturing a composite material (1) according to claims 1 and 2, **characterized in that** the webs (11, 11') comprise at least one of the synthetic fibers of the type: polypropylene (PP), polyethylene (PE), or polyethylene terephthalate (PET) fibers.

4. The process for manufacturing a composite material (1) according to claims 1 to 3, **characterized in that** the proportion of the mixture between the natural fibers and the synthetic fibers of the webs (11, 11') ranges from 20 to 70%.

5. The process for manufacturing a composite material (1) according to claims 1 to 4, **characterized in that** the heating takes place from the outer portion of the webs (11, 11') to the inside thereof.

6. The process for manufacturing a composite material (1) according to claims 1 to 5, **characterized in that** the process of shaping the first and second webs (11, 11') takes place in a mold.

7. The process for manufacturing a composite material (1) according to claim 6, **characterized in that** the mold is cooled.

8. The process for manufacturing a composite material (1) according to claim s 1 - 7, **characterized in that** the olefin-based intermediate layer (12) of step (iii) is cross-linked foam.

9. The process for manufacturing a composite material (1) according to claims 1 - 8, **characterized in that** the temperature of the webs (11, 11') heated in step (i) promotes the melting of the olefin-based intermediate layer (12).

10. The process for manufacturing a composite material (1) according to claims 1 - 9, **characterized in that** a coating layer (13) may be arranged in contact with at least one mold cavity.

11. The process for manufacturing a composite material (1) according to claim 10, **characterized in that** the adhesion of the coating layer (13) to the webs (11, 11') is promoted by melting the synthetic fibers.

12. The process for manufacturing a composite material (1) according to claims 1 - 10, **characterized in that**, after the step (v), the material (1) receives additional finish components.

13. The process for manufacturing a composite material (1) according to claims 1 - 12, **characterized in that** the additional components are aggregated to the material (1) by adhesive, riveting, vibration welding, hot-plate welding, or ultra-sound welding.

14. The process for manufacturing a composite material (1), **characterized by** comprising the steps:
• step (i): arranging at least one first web (11) and at least one second web (11'), each being composed of natural and synthetic fibers, and at least one olefin-based intermediate layer 12 between the first web (11) and the second web (11') to obtain the desired geometry;
• step (ii): heating, pressing and adhering the assembly obtained in step (i); and
• step (iii): cooling the assembly obtained in step (ii) until at least a hardening temperature.

15. A composite material (1) having at least one first web (11) and at least one second web (11'), each being composed of natural and synthetic fibers, the first and second webs (11, 11') being associated to each other, **characterized in that** the association between each first and second webs (11, 11') is provided by means of an olefin-based intermediate layer (12).

16. The composite material (1) according to claim 15, **characterized in that** the first and second webs (11, 11') comprise at least one of the natural fibers of the type: jute, sisal, curauá *(Neoglaziovia variegata*), cotton, or hemp fibers.

17. The composite material (1) according to claims 15 and 16, **characterized in that** the first and second webs (11, 11') comprise at least one of the synthetic fibers of the type: polypropylene (PP), polyethylene (PE), or polyethylene terephthalate (PET).

18. The composite material (1) according to claims 15 - 17, **characterized in that** the proportion of the mixture between the natural fibers and the synthetic fibers of the first and second webs (11, 11') ranges from 20 to 70%.

19. The composite material (1) according to claims 15 - 18, **characterized in that** the olefin-based intermediate layer (12) is molten to promote the association between the first and second webs (11, 11').

20. The composite material (1) according to claims 15 - 19, **characterized in that** at least one outer face of the material (1) is provided with a coating layer (13).

21. The composite material (1) according to claims 15 - 20, **characterized by** having structural function for application in the automobile industry, shipbuilding, aeronautics, or civil engineering.

22. The composite material (1) for structural or finish application provided with at least one first web (11) and at least one second web (11'), each being compose of natural and synthetic fibers, the first and second webs (11, 11') being associated to each other, **characterized in that** the association between each first and second webs (11, 11') is promoted by means of a heat-insulation intermediate layer (12), the composite material (1) being provided with olefin base.
